# EUROPEAN PATENT SPECIFICATION

(11) **EP 1 983 676 B1**
(45) Date of publication and mention of the grant of the patent: **11.12.2013**
(21) Application number: 07290481.6
(22) Date of filing: 18.04.2007
(51) Int. Cl.: H04L 1/00

(54) **Method and computer readable medium for dynamically configuring a modulation and coding scheme(MCS) used in a wireless network**
Verfahren und computerlesbares Medium zur dynamischen Konfigurierung eines in einem drahtlosen Netzwerk verwendeten Modulations- und Kodierungsschemas (MCS)
Procédé et support lisible sur ordinateur pour configurer dynamiquement un schéma de modulation et de codage (MCS) utilisés dans un réseau sans fil

(43) Date of publication of application: 22.10.2008
(73) Proprietor: Motorola Mobility LLC, Libertyville, IL 60048 (US)
(72) Inventor: Gosteau, Jeremy, France 75014 (FR); De Courville, Marc Bernard, IDF 75014 PARIS (FR); Rouquette-Leveil, Stephanie, 91300 Massy (FR)
(74) Representative: Cross, Rupert Edward Blount

(56) References cited:
- EP-A- 1 489 770
- EP-A- 1 601 126
- EP-A- 1 737 263
- US-A1- 2006 187 852
- US-A1- 2006 233 272
- US-A1- 2007 002 742
- SYED AON MUJTABA: "Technical Specification for MAC and the PHY layer of the TGn Sync proposal to IEEE 802.11 TGn" IEEE P802.11 WIRELESS LANS, IEEE 802.11-04/0889R6, May 2005 (2005-05), pages 1-134, XP002340381

## Description

### Field of the Invention

The present invention relates generally to wireless transmission and reception systems and techniques, and more particularly to a wireless communication network such as those being developed for use in IEEE 802.11 wireless LAN standards.

### Background of the Invention

In a wireless local area network (WLAN) environment, an access point (AP) may serve as an intermediary between wireless communication stations and a wired network. Network data to be delivered to a particular wireless communication station traverses the network and reaches the access point, which in turn transmits the data to the particular wireless communication station. An access point may extend service to many wireless communication stations at once. Conventionally, an access point transmits data to wireless communication stations by addressing each packet to an individual communication station. In recent years, wireless data communication in domestic and enterprise environments have become increasingly commonplace and an increasing number of wireless communication networks have been designed and deployed. In particular, the use of wireless networking has become prevalent and wireless network standards such as IEEE 801.11 a and IEEE 801.11 g have become commonplace.

The requirement for increasing data rates, communication capacity and quality of services has led to continued research and new techniques and standards being developed for wireless networking. One such standard is the IEEE 801.11n standard which is currently under development. IEEE 801.11n is expected to operate in the 2.4GHz or 5GHz frequency spectrum and promises data rates of around 100Mbps and above on top of the MAC layer. IEEE 801.11n will use many techniques which are similar to the earlier developed IEEE 801.11 a and IEEE 801.11 g standards. The standard is to a large extent compatible with many of the characteristics of the earlier standards thereby allowing reuse of techniques and circuitry developed for these. For example, as in the previous standards IEEE 801.11a and IEEE 801.11g, IEEE 801.11n will use Orthogonal Frequency Division Multiplex (OFDM) modulation for transmission over the air interface.

Orthogonal frequency division multiplexing (OFDM) is an increasingly attractive modulation technique for high-bandwidth wireless applications since it dramatically simplifies equalization of intersymbol interference (ISI) channels. OFDM works by dividing up a wideband channel into a larger number of sub-channels. By placing a subcarrier in each sub-channel, each subcarrier may be modulated separately depending on the signal to noise ratio (SNR) or other signal characteristics in that particular narrow portion of the band.

When an AP is deployed the operator first needs to manually configure various parameters based on the particular application in which the AP is to be used. For example, one set of parameters that needs to be configured involves the various PHY layer transmission modes that may be employed by the AP and the STAs. Currently, the IEEE 802.11n draft specification includes a total of 1930 different combinations of modulation and coding schemes (MCS) that may be used by a MIMO encoder. Accordingly, selecting and manually configuring an appropriate MCS scheme to use in a given network can be difficult and time consuming.
EP 1 601 126 describes a wireless communication system in which a basic transmission scheme and an advanced transmission scheme are defined, where a wireless terminal is arranged to transmit capability information to allow a base station to determine whether the wireless terminal is capable of receiving a signal based on the advanced transmission scheme.
EP 1 737 263 describes a radio base station apparatus and transmission rate notifying method.
The invention provides a method as set out in claim 1 and a computer-readable medium according to claim 10.

### Brief Description of the Drawings

FIG. 1 shows a wireless communication system that includes user stations (STAs) and one or more network access points (AP).

FIGS. 2a and 2b show two alternative ways to set up a wireless network by associating a STA with an AP.

FIG. 3 shows one example of an AP that may use link adaptation to establish and update its basic MCS set.

FIG. 4 is a flowchart showing one example of a process that may be implemented by an AP to select and adjust the MCS set it employs.

### Detailed Description

While the following detailed description may describe examples in connection with wireless networks utilizing Orthogonal Frequency Division Multiplexing (OFDM) adaptive modulation, the techniques described herein are not limited thereto and, for example, can be implemented using other modulation schemes which may utilize link adaptation information where suitably applicable.

The techniques described herein may be used in a variety of applications including transmitters and receivers of a radio system. Radio systems specifically included within the scope of the present invention include, but are not limited to: wireless local area network (WLAN) systems, wireless personal area networks (WPAN) systems, wide metropolitan area network (WMAN) systems, wireless wide area network (WWAN) systems, and in particular to 802.11-based WLANs, 802.15-based wireless PANs, 802.16/20 based wireless MANs, and equivalents thereto. Further, the radio systems within the scope of the invention may include cellular radiotelephone systems, satellite systems, personal communication systems (PCS), two-way radio systems, one-way pages, two-way pagers, personal computers (PC), personal digital assistants (PDA), personal computing accessories (PCA) and all existing and future arising systems which may be related in nature and to which the principles described herein could be suitably applied.

Hereafter, the term "station" (STA) includes, but is not limited to, a wireless transmit/receive unit (WTRU), a user equipment, a fixed or mobile subscriber unit, a pager, or any other type of device capable of operating in a wireless environment. When referred to hereafter, the term "access point" (AP) includes, but is not limited to, a base station, a site controller, or any other type of interfacing device in a wireless environment.

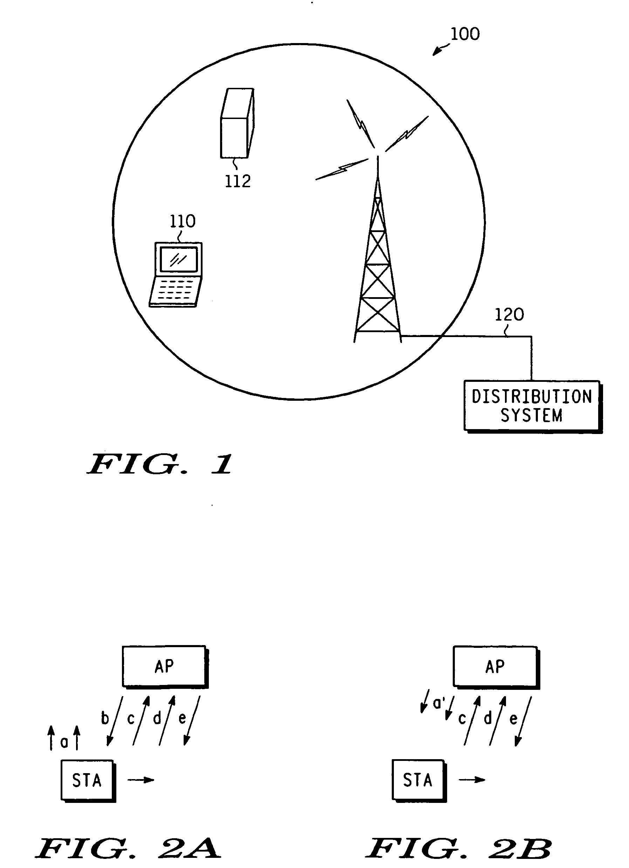

Turning to FIG. 1, a wireless communication system 100 may include one or more user stations (STAs) 110, 112 and one or more network access points (AP) 120. System 100 may be any type of wireless network such as a wireless local area network (WLAN), wireless wide area network (WWAN) or cellular network where stations 110, 112 communicate with access station 120 via a communication link or channel. The network defined by the STAs 110, 112 and AP 120 are referred to as a Basic Service Set (BSS). The STAs gain access to an external network or a distribution system through the AP 120. Each BSS has a BSS ID that distinguishes it from other BSSs.

A STA enters a BSS by associating with the AP. An association service is used to make a logical connection between the STA and the access point. Each station must become associated with an access point before it is allowed to send data through the access point. The association procedure between an STA and an AP requires the STA to send an association request, followed by negotiation with the AP prior to associating the STA to the AP.

In order for a STA to associate with an AP the STA must be capable of supporting a minimum set of modulation and coding scheme (MCS) employed by the AP. The MCS defines the operational transmission mode of the communication link, including items such as the modulation technique and the data rate. In addition, if Multiple Input Multiple Output (MIMO) antennas are employed, such as in IEEE 802.11n, for example, the MCS may include different transmission modes arising from items such as: Space Time Block Coding (STBC), Spatial Multiplexing (SM), Transmit Beamforming (TxBF), half/normal Guard Interval (GI) duration, Low Density Parity Check (LDPC) codes, Bit Interleaved Coded Modulation (BICM), spatial expansion, 20/40MHz channelization, and asymmetric antenna configurations (on the AP and STA but also on the same device for uplink and downlink).

FIGS. 2a and 2b show two alternative ways to set up a wireless network by associating a STA with an AP. Of course, the precise number, type and content of frames communicated between the STA and AP to form an association may differ from those shown herein, which are presented for the purpose illustration only. In FIG. 2a the STA initiates the process by transmitting a probe request frame a without necessarily knowing if an AP is present and reachable. Such a probe request frame contains the MAC address of the STA. If the AP receives the request frame, the AP will answer by transmitting a probe response b. The AP also attempts to find the address of the STA in its address list of STAs allowed to access the network during an authentication process. If authentication is successful, an authentication frame c is sent by the STA to the AP. Thereafter an association request d is also sent by the STA to the AP and the association is finalized when the response e is sent back to the STA by the AP.

FIG. 2b show the AP initiating the association process with the STA. In this case the AP periodically transmits a beacon broadcast to allow STAs to locate and identify a BSS of a WLAN. The AP transmits the beacon frame a' to be received by the STA. After receiving the beacon frame the STA proceeds with the usual authentication c followed by the association request d answered by the AP with an association response e, thereby opening access to the network.

During the association process MAC and PHY layer frames are exchanged to perform a variety of control and management tasks. One such task involves exchanging frames that denote the basic MCS set supported by the AP and the STA. In the context of IEEE 802.11, Physical Layer Protocol Data unit (PPDU) frames are exchanged which include a physical layer preamble having multiple fields, including an MCS field. In the case of IEEE 802.11n in particular, the MCS field is typically located in the HT-SIG header field.

As previously mentioned, a basic set or sets of MCSs need to be established in an AP when it is first deployed. The basic MCS set denotes the minimum required set of PHY transmission modes that must be supported by a STA to associate to a BSS. IEEE 802.11 n- compatible devices (i.e., STAs) may have a wide variety of different characteristics and features depending on the device class (e.g., handheld, portable, fixed, etc.) and device application (e.g., handheld, PC-based, CE-based, etc.). Considering the proliferation of STA device configurations, it can be difficult to determine an optimal, or even an appropriate, basic MCS set that should be employed by any given AP in a BSS.

Optimizing the basic MCS set that is used by an AP for a given set of STAs that are to associate with the AP can provide a number of advantages. For example, the AP can select an MCS that maximizes throughput with the required Quality of Service (Qos) (e.g., packet error rate) for the particular environment and set of STAs. Additionally, the MCS set can be optimized to provide the desired degree of protection and privacy appropriate for the BSS in which the AP operates. For instance, if the BSS is intended to provide wireless coverage only over a very limited area such as a single room in a building, the AP can select an MCS set appropriate for transmission over this limited range.

Instead of manually configuring an AP with a basic MCS set an automatic approach may be used to select, establish and dynamically update as necessary the basic MCS set. This can be accomplished using a modulation or link adaptation technique that is normally used to improve throughput and/or efficiency in wireless OFDM systems by adjusting transmission parameters, such as subcarrier modulation orders, power allocation and/or code rate, to best fit the current channel state. As the channel varies over time, adaptations can be made on each subcarrier in order to continually optimize the data-carrying capacity of the channel. This is often referred to as "adaptive modulation and coding." Alternate and/or additional transmission parameters, such as subcarrier power allocation and/or code rates, may also be adapted or modified to improve the efficiency of communications. The various types of transmission adaptations are sometimes generically, individually and/or collectively, referred to as "link adaptation."

Link adaptation or adaptive modulation and coding may be used to re-define a basic MCS set employed by an AP based on the characteristics of the STA associated to the BSS or attempting to associate to the BSS. For instance, if an AP monitoring the MCS set of all its associated STAs determines that all the STAs can support a higher rate MCS, the AP can redefine the basic MCS set to include the higher rate MCS.

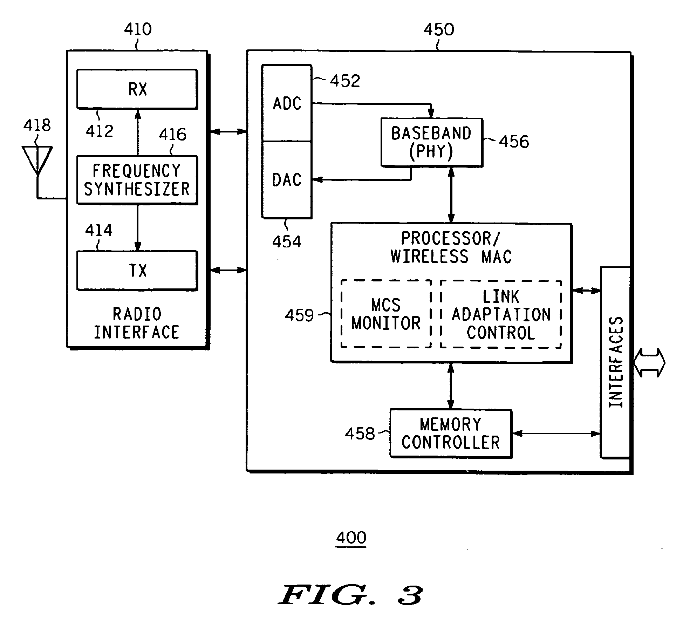

FIG. 3 shows one example of an AP 400 that may use link adaptation to establish and update its basic MCS set. The AP 400 generally includes a radio frequency (RF) interface 410 and a baseband and medium access controller (MAC) processor portion 450. RF interface 410 may be any component or combination of components operative to send and receive multi-carrier modulated signals. In one example RF interface includes a receiver 412, transmitter 414 and frequency synthesizer 416. Interface 410 may also include bias controls and a crystal oscillator and/or one or more antennas 418. Furthermore, RF interface 410 may alternatively or additionally use external voltage-controlled oscillators (VCOs), surface acoustic wave filters, IF filters and/or RF filters. Various RF interface designs and their operation are known in the art and additional description thereof is therefore omitted.

In some cases RF interface 410 is configured to be compatible with one or more of the Institute of Electrical and Electronics Engineers (IEEE) 802.11 frequency band standards for wireless local area networks (WLAN). For example, RF interface 410 may be configured for compatibility and/or backward compatibility with the IEEE 802.11 (a-b) (g) and/or (n) standards.

Baseband and MAC processing portion 450 communicates with RF interface 410 to process receive/transmit signals and may include, by way of example only, an analog-to-digital converter 452 for down converting received signals, a digital to analog converter 454 for up converting signals for transmission, a baseband processor 456 for physical (PHY) layer processing of respective receive/transmit signals, and one or more memory controllers 458 for managing read-write operations from one or more internal and/or external memories (not shown). Processing portion 450 may also include processor 459 for medium access control (MAC)/data link layer processing. Processor 459 or additional circuitry (not shown) may be configured to perform the processes for monitoring the MCS set supported by the stations and adjusting one or more of the various transmission parameters to conform to the MCS set supported by the stations. Alternatively or in addition, baseband processor 456 may share processing for these functions or perform these processes independent of processor 459. MAC and PHY processing may also be integrated into a single component if desired.

The components and features of apparatus 400 may be implemented using any combination of discrete circuitry, application specific integrated circuits, logic gates and/or single chip architectures. Further, the features of apparatus 400 may be implemented using microcontrollers, programmable logic arrays and/or microprocessors or any combination of the foregoing where suitably appropriate. Although a specific architecture has been described in connection with apparatus 400, including specific functional elements and relationships, it is contemplated that the apparatus may be implemented in a variety of ways. For example, functional elements may be packaged together or individually, or may be implemented by fewer, more or different devices, and may be either integrated within other products, or adapted to work with other products externally. When one element is indicated as being responsive to another element, the elements may be directly or indirectly coupled.

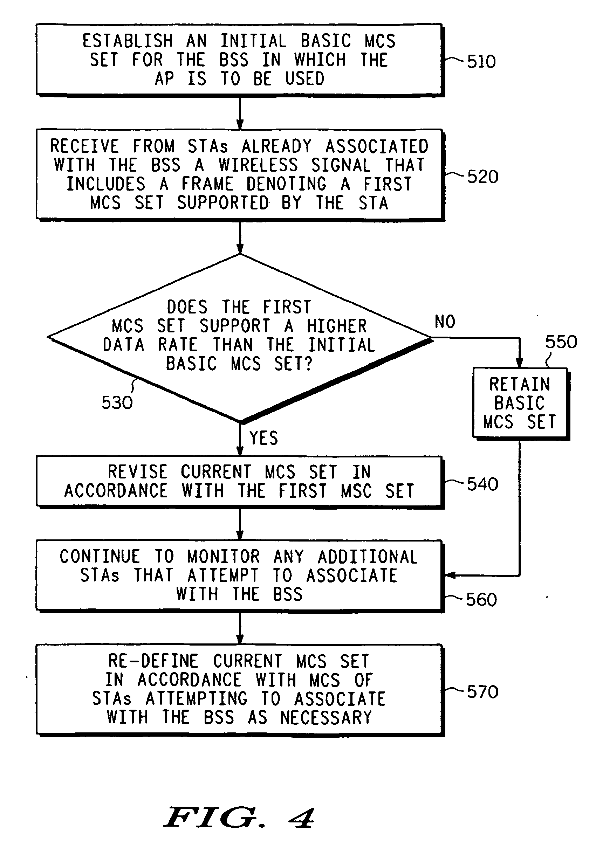

FIG. 4 is a flowchart showing one example of a process that may be implemented by an AP to select and adjust the MCS set it employs. The method begins in step 510 by establishing an initial basic MCS set for the BSS in which the AP is to be used. The initial basic MCS set may be selected in any of a variety of different ways. For example, in some cases the initial basic MCS set may be a default MCS set that is relatively conservative (e.g., small constellations, low data rates) and thus widely used by many different types of STAs. Such a selection increases the likelihood that any given STA will be able to associate with the AP at the time of deployment. Next, in step 520 the AP receives from one or more STAs already associated with the BSS a wireless signal that includes a frame denoting a first set of supported MCSs by the STA. The AP compares this first set of supported MCSs to the initial basic MCS set in step 530. If the first set of supported MCSs supports a higher data rate than the initial basic MCS set, then in step 540 the AP revises its MCS set in accordance with the first set of supported MCSs. On the other hand, if the first set of supported MCSs does not support a higher data rate, then in step 550 the AP leaves its basic MCS set unchanged and continues in step 560 to monitor any additional STAs that attempt to associate with the BSS. If at a later time the AP identifies a second set of supported MCSs transmitted by a second STA that is attempting to associate with the BSS, the AP can in step 570 re-define its current basic MCS set to include or be replaced by the second set of supported MCSs if, for example, the second STA only supports an MCS set with a reduced data rate in comparison to the current basic MCS set.

In determining whether to employ a higher basic MCS set, the AP can examine a number of factors and not simply throughput. For example, the AP may examine the MCS set supported by all STAs that have been previously associated with the AP as well as all STAs currently associated with the AP. In addition, the AP may also consider the reliability of any potential MCS set it may employ. For example, while all the currently associated STAs may be able to support a higher rate MCS set, they may do so with a reduced reliability (e.g., a packet error rate above a threshold value), in which case the AP may decide not to support the higher rate basic MCS set but rather to remain at its current basic MCS set. Alternatively, if all the currently associated STAs can support the higher rate MCS set with an acceptable reliability (e.g., a packet error rate below a threshold value), the AP may decide to support the higher rate MCS set instead of or in addition to its current basic MCS set.

The processes described above, including that shown in FIG. 4, may be implemented in a general, multi-purpose or single purpose processor. Such a processor will execute instructions, either at the assembly, compiled or machine-level, to perform that process. Those instructions can be written by one of ordinary skill in the art following the descriptions herein and stored or transmitted on a computer readable medium. The instructions may also be created using source code or any other known computer-aided design tool. A computer readable medium may be any medium capable of carrying those instructions and includes a CD-ROM, DVD, magnetic or other optical disc, tape, silicon memory (e.g., removable, non-removable, volatile or non-volatile), packetized or non-packetized wireline or wireless transmission signals.

It will furthermore be apparent that other and further forms of the invention, and embodiments other than the specific embodiments described above, may be devised without departing from the scope of the appended claims and their equivalents, and it is therefore intended that the scope of this invention will only be governed by the following claims.

## Claims

1. A method comprising:
establishing (510) an initial basic Modulation and Coding Scheme, MCS, set for a Basic Service Set, BSS, the basic MCS set identifying a minimum set of transmission modes which must be supported by a station in order to associate with the BSS;
a plurality of stations, which support said initial basic MSC set, associating with the BSS;
receiving (520) from at least one of the plurality of stations associated with the BSS a wireless signal that includes a frame denoting a first set of MCSes supported by the at least one station; and
in response to receipt of the wireless signal, revising (540) the initial basic MCS set in accordance with the first set of MCSes supported by the at least one station to include at least one MCS supported by the station in the initial basic MCS set, to form a revised basic MCS set.

2. The method of claim 1 wherein revising (540) the initial basic MCS set comprises:
comparing (530) the first set of MCSes supported by the station to the initial basic MCS set; and
responsive to the first set of MCSes supported by the station supporting a higher data rate than the initial basic MCS set, replacing the initial version of the basic MCS set with the first set of MCSes supported by the station.

3. The method of claim 1 wherein the first set of supported MCS includes at least one MCS of a higher data rate than the MCSs in the initial basic MCS set.

4. The method of claim 1 further comprising:
identifying a second set of supported MCSs transmitted by a second station attempting to associate with the BSS; and
revising the initial basic MCS set of the BSS to include at least one of the MCSs supported by the second station.

5. The method of claim 1 wherein receiving (520) the wireless signal further comprises:
receiving wireless signals from a plurality of stations associated with the BSS, the wireless signals each including a frame denoting a respective supported MCS set by the station;
in response to receipt of the wireless signals, revising the initial basic MCS set in accordance with one of the respective supported MCS sets transmitted by all of the plurality of stations.

6. The method of claim 1 wherein the wireless signal conforms to an IEEE 802.11 protocol.

7. The method of claim 1 wherein the BSS employs OFDM.

8. The method of claim 1 wherein the initial basic MCS set is established by a base station.

9. The method of claim 1 wherein the first set of supported MCSs includes at least one transmission mode arising from an item selected from the group consisting of:
Space Time Block Coding, STBC, Spatial Multiplexing, SM, Transmit Beamforming, TxBF, half/normal Guard Interval duration, Low Density Parity Check, LDPC, codes, Bit Interleaved Coded Modulation, BICM, spatial expansion, 20/40MHz channelization, and asymmetric antenna configurations.

10. A computer-readable medium encoded with instructions to be executed by a computer according to any one of the preceding claims.

## Patentansprüche

1. Verfahren, das Folgendes umfasst:
Aufbau (510) eines anfänglichen grundlegenden Modulations- und Kodierungsschmea-, MCS, Satzes für ein Basic Service Set, BSS, wobei der grundlegende MCS-Satz einen minimalen Satz von Übertragungsmodi identifiziert, die von einer Station unterstützt werden müssen, um dem BSS zugehörig zu sein;
eine Vielzahl von Stationen, die den anfänglichen grundlegenden MSC-Satz unterstützen und dem BSS zugehörig sind;
Empfang (520) von seiten mindestens einer der Vielzahl-von Stationen, die dem BSS zugehörig sind, eines drahtlosen Signals, das einen Rahmen aufweist, der einen ersten Satz von MCS kennzeichnet, die von der mindestens einen Station unterstützt werden; und
ansprechend auf den Empfang des drahtlosen Signals, Überprüfen (540) des anfänglichen grundlegenden MCS-Satzes gemäß dem ersten Satz von MCS, die von der mindestens einen Station unterstützt werden, so dass er mindestens ein MCS aufweist, das von der Station in dem anfänglichen grundlegenden MCS-Satz unterstützt wird, um einen überprüften grundlegenden MCS-Satz zu bilden.

2. Verfahren nach Anspruch 1, wobei das Überprüfen (540) des anfänglichen grundlegenden MCS-Satzes Folgendes umfasst:
Vergleichen (530) des ersten Satzes von MCS, die von der Station unterstützt werden, mit dem anfänglichen grundlegenden MCS-Satz; und
ansprechend auf den ersten Satz von MCS, die von der Station unterstützt werden, Unterstützen einer höheren Datenrate als der anfängliche grundlegende MCS-Satz, Ersetzen der anfänglichen Version des grundlegenden MCS-Satzes durch den ersten Satz von MCs, die von der Station unterstützt werden.

3. Verfahren nach Anspruch 1, wobei der erste Satz von unterstützten MCS mindestens ein MCS einer höheren Datenrate aufweist als die MCS in dem anfänglichen grundlegenden MCS-Satz.

4. Verfahren nach Anspruch 1, das des Weiteren Folgendes umfasst:
Identifizieren eines zweiten Satzes von unterstützten MCS, die von einer zweiten Station in einem Versuch übertragen werden, dem BSS zugehörig zu sein; und
Überprüfen des anfänglichen grundlegenden MCS-Satzes des BSS, so dass er mindestens eine der von der zweiten Station unterstützten MCS aufweist.

5. Verfahren nach Anspruch 1, wobei der Empfang (520) des drahtlosen Signals des Weiteren Folgendes umfasst:
Empfang von drahtlosen Signalen von einer Vielzahl von Stationen, die dem BSS zugehörig sind, wobei die drahtlosen Signale jeweils einen Rahmen aufweisen, der einen entsprechenden von der Station unterstützten MCS-Satz kennzeichnet;
ansprechend auf den Empfang des drahtlosen Signals, Überprüfen des anfänglichen grundlegenden MCS-Satzes gemäß einem der entsprechenden unterstützten MCS-Sätze, die von allen der Vielzahl von Stationen übertragen werden.

6. Verfahren nach Anspruch 1, wobei das drahtlose Signal einem IEEE 802.11-Protokoll entspricht.

7. Verfahren nach Anspruch 1, wobei der BSS OFDM anwendet.

8. Verfahren nach Anspruch 1, wobei der anfängliche grundlegende MCS-Satz von einer Basisstation aufgebaut wird.

9. Verfahren nach Anspruch 1, wobei der erste Satz von unterstützten MCS mindestens einen Übertragungsmodus aufweist, der aus einem Element hervorgeht, das aus der Gruppe bestehend aus Folgenden ausgewählt ist: Raum-Zeit-Blockkodierung, STBC, Raummultiplexing, SM, Transmit Beamforming, TxBF, halbe/normale Schutzintervalldauer, Low Density Parity Check-, LDPC, Codes, Bit Interleaved Coded Modulation, BICM, räumliche Ausdehnung, 20/40 MHz-Kanalisierung und asymmetrische Antennenkonfigurationen.

10. Computerlesbares Medium, das mit von einem Computer auszuführenden Befehlen kodiert ist, gemäß einem der vorhergehenden Ansprüche.

## Revendications

1. Procédé comprenant :
établir (510) un Schéma de Modulation et de Codage de base initial, MCS, établi pour un Ensemble de Services de Base, BSS, l'ensemble de MCS de base identifiant un ensemble minimum de modes de transmission qui doivent être supportés par une station pour l'association avec le BSS ;
une pluralité de stations qui supportent ledit ensemble MSC de base initial, s'associant au BSS ;
recevoir (520) d'au moins une de la pluralité de stations associées au BSS un signal sans fil qui inclut une trame indiquant un premier ensemble de MCSes supportés par la au moins une station ; et
en réponse à la réception du signal sans fil, réviser (540) le MCS de base initial établi en accord avec le premier ensemble de MCSes supportés par la au moins une station afin d'inclure au moins un MCS supporté par la station dans l'ensemble MCS de base initial pour former un ensemble MCS de base révisé.

2. Procédé selon la revendication 1, dans lequel la révision (540) de l'ensemble MCS de base initial comprend :
comparer (530) le premier ensemble de MCSes supporté par la station avec l'ensemble MCS de base initial ; et
en réponse au premier ensemble de MCSes supporté par la station supportant un débit de données plus élevé que l'ensemble MCS de base initial, remplacer la version initiale de l'ensemble MCS de base par le premier ensemble de MCSes supportés par la station.

3. Procédé selon la revendication 1, dans lequel le premier ensemble de MCS supportés comprend au moins un MCS d'un débit de données plus élevé que le MCSs dans l'ensemble de MCS de base initial.

4. Procédé selon la revendication 1, comprenant en outre :
identifier un deuxième ensemble de MCSs supportés transmis par une deuxième station cherchant à s'associer avec le BSS ; et
réviser l'ensemble MCS de base initial du BSS pour inclure au moins un des MCSs supportés par la deuxième station.

5. Procédé selon la revendication 1, dans lequel la réception (520) du signal sans fil comprend en outré :
recevoir des signaux sans fil d'une pluralité de stations associées au BSS, les signaux sans fil incluant chacun une trame indiquant un MCS supporté respectif établi par la station ;
en réponse à la réception des signaux sans fil, réviser l'ensemble MCS de base initial en accord avec un des ensembles MCS supportés respectifs transmis par toutes de la pluralité de stations.

6. Procédé selon la revendication 1, dans lequel le signal sans fil est conforme à un protocole IEEE 802.11.

7. Procédé selon la revendication 1, dans lequel le BSS utilise le OFDM.

8. Procédé selon la revendication 1, dans lequel l'ensemble MCS de base initial est établi par une station de base.

9. Procédé selon la revendication 1, dans lequel le premier ensemble de MCSs supportés comprend au moins un mode de transmission résultant d'un article sélectionné dans le groupe consistant en : Procédé de Codage de Blocs spatio-temporel, STBC, Multiplexage Spatial, SM, Formation de Faisceau de Transmission, TxBF, demi-durée/durée normale de l'Intervalle de Garde, Vérification de Parité à Faible Densité, LDPC, codes, Modulation Codée des Bits de Données Entrelacées, BICM, expansion spatiale, canalisation 20/40 MHz et des configurations d'antennes asymétriques.

10. Support lisible par ordinateur codé avec des instructions à exécuter par un ordinateur selon l'une quelconque des revendications précédentes.
